(19) Europäisches Patentamt
European Patent Office
Office européen des brevets

(11) **EP 3 383 088 A1**

(12) **EUROPEAN PATENT APPLICATION**

(43) Date of publication:
**03.10.2018 Bulletin 2018/40**

(51) Int Cl.:
***H04W 24/02*** *(2009.01)*

(21) Application number: **17382164.6**

(22) Date of filing: **31.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Telefonica Digital España, S.L.U.**
**28013 Madrid (ES)**

(72) Inventors:
• **Leontiadis, Ilias**
 **28013 Madrid (ES)**
• **Serrà Julià, Joan**
 **28013 Madrid (ES)**
• **Finamore, Alessandro**
 **28013 Madrid (ES)**

(74) Representative: **Carlos Hernando, Borja**
 **Garrigues IP, S.L.P.**
 **Hermosilla, 3**
 **28001 Madrid (ES)**

(54) **A COMPUTER IMPLEMENTED METHOD, A SYSTEM AND COMPUTER PROGRAMS TO QUANTIFY THE PERFORMANCE OF A NETWORK**

(57) The method comprising collecting different KPIs from network radio access elements of a network comprising different sectors; collecting via a proxy server deployed in an operator's network of said network different QoE groundtruth metrics; and relating the collected KPIs with a given QoE groundtruth metric of said collected QoE groundtruth metrics to compute a KPI score that better matches the given QoE groundtruth metric using a computing algorithm: a) modifying a threshold value and/or a weight value used to categorize a status of a given sector of said different sectors; b) computing a correlation with the modified threshold and/or weight values providing a correlation result; and c) comparing said correlation result with a previous correlation result providing a comparison result and using said comparison result to compute the KPI score if the correlation result improves the previous correlation result or going back to step a) if the correlation result does not improve the previous correlation result.

Fig. 1

## Description

### Field of the art

The present invention is directed, in general, to the field of network measurements. In particular, the invention relates to a computer implemented method, a system and computer programs to quantify the performance of a network.

### Background of the invention

Currently, the health of a communications network is mostly monitored at the edge via the so-called Key Performance Indicators (KPIs), i.e., passive measurements periodically collected from network radio access elements (i.e., sectors, towers, and controllers) to monitor both wireless channels and backhaul performance. Operators complement passive measurements with drive tests and controlled field experiments for fine-grained benchmarking and root cause analysis.

Assessing KPIs and per customer Quality of Experience (QoE) for the whole network at scale is a daunting task: cellular networks are composed of hundreds of thousands of elements (e.g., sectors, cell towers, radio controllers, etc.), daily used by millions of customers using a heterogeneous set of applications. In practice, there is the need to consolidate multiple metrics into single performance values that reflect network elements' health. Considering sectors, such value is commonly referred to as hotspot score: the higher the score, the more "hot" or problematic a sector is. The hotspot score combines multiple KPIs related to failures, signaling, coverage, voice, data availability, congestion, etc., into a single performance index, normally used to objectively rank sectors. In this way network teams can prioritize troubleshooting and interventions to address performance bottlenecks, understand and forecast current demand, define planning strategies, etc.

The current methodology to combine KPIs into a single metric has been established by equipment vendors and operators based on logical decisions, Service Level Agreements (SLAs), and controlled experiments such as drive tests and field tests However, it remains an empirical approach, funded on deep domain knowledge finetuned over the years.

While the current methodology addresses some of the operators' current needs, it suffers from two main limitations. Firstly, it is unknown whether the current scoring function truly reflects user experience. Secondly, the aforementioned methodology lacks flexibility, as it obeys to a static picture of the users' and network's needs. For instance, in the 90s, the quality of the voice network used to be the most significant factor to improve but, with the roll out of Voice over LTE (VoLTE), focus will further steer towards data services. Such perturbations in the network equilibrium require (potentially significant manual) effort from vendors and operators to identify a novel configuration of KPIs capable to reflect the new network scenario. In a nutshell, there is the need for a methodology that can easily cope with such service and demand changes, and technology evolution.

Over the years there have been many attempts to understand how KPIs can be used to spot cellular performance bottlenecks and network planning [1]. In [2], an iterative process of network deployment and monitoring through KPIs and drive tests was used to identify the optimal network configuration. Nokia engineers demonstrated how controlled experiments such as drive tests and on-site inspections, together with A-B testing, can be used to establish the relation between groundtruth and KPIs in order to optimize the network [3]. In [5], the authors show how drive tests can be used to identify the main KPIs that relate to QoS in a tetra network. Finally, field tests are used to build an empirical correlation between KPIs and throughput [4]. In addition to these works, there have been vendor recommendations on how to set performance thresholds and identify the worse performing sectors in the network. For instance, Huawei [6] also describes an iterative A-B process and provide recommendations for default values while Nokia [7] has extensively analyzed the meaning of each KPI.

Hotspot score (current).-

While establishing thresholds for each KPI enables a fine-grained vision of specific problems, each network element is associated with hundreds of metrics. It is then desirable to consolidate measurements into a single performance index so to i) quantify the "health" of each network element, ii) easily assess the whole network status and trends and iii) narrow down on sites that need attention.

An example of such indices is the hotspot score, which represents how "hot" or problematic a given sector is. It is a weighted combination of thresholded KPIs related to signaling, voice, data availability and data congestion:

$$s_b = S\left(\mathbf{k}_b, \mathbf{w}, \mathbf{t}\right) = \sum_{i=1}^{n} w_i \cdot H\left(k_{b,i} - t_i\right), \qquad (1)$$

where $b$ is the sector under study generating n KPIs collected in the vector $k_b$. The KPIs are associated to weight $w$ and threshold $t$ vectors, while $H(\cdot)$ is the Heaviside step function which outputs 1 when the KPI value $k_{b,i}$ reaches the corresponding threshold $t_i$ and 0 otherwise. The higher the score $s_b$, the more "hot" the sector $b$ is. In a nutshell, a hotspot score is a linear combination of the weights associated to KPIs that trigger.

Notice also that, since KPIs are gathered periodically, $s_b$ is time dependent, but it has been avoided to express it in Eq. 1 for readability. This means that individual $s_b$ values can be further combined (e.g., simply accumulated) to reflect performance over a longer time span. Sectors that exhibit high scores for a long period of time (e.g., a few days or even weeks) can then be flagged for intervention (such as changing the configuration, fixing possible faults, adding capacity, or even upgrading the whole site to a newer technology like 4G). However, when referring to a hotspot score in the following, it will be considered the values computed using KPIs gathered at the baseline periodicity of the monitoring system, e.g., one hour.

## References

[1] R. Kreher and K. Gaenger. Key Performance Indicators and Measurements for LTE Radio Network Optimization. John Wiley & Sons, Ltd, 2010.

[2] M. A. Alam. Mobile network planning and kpi improvement. In Thesis, Linnaeus University, Department of Physics and Electrical Engineering, Sweden, 2013.

[3] H. Holma and A. Toskala. WCDMAfor UMTS: HSPA Evolution and LTE. John Wiley & Sons, Inc., New York, NY, USA, 2007.

[4] S.-V. Hn. Case studies of network planning for wireless broadband services hsdpa and wimax. Master Thesis, OmniTele, 2007.

[5] J. D. L. Delgado and J. M. R. Santiago. Key performance indicators for QOS assessment in TETRA networks. CoRR, abs/1401.1918, 2014.

[6] G. H. X Kaiping. Gsm kpi monitoring and improvement guide. Huawei Technologies Co., Ltd., 2008.

[7] N. Agarwal. Wcdma: Kpi analysis & optimization. Nokia Technologies Co., Ltd., 2008.

## Summary of the Invention

Embodiments of the present invention provide according to a first aspect a computer implemented method to quantify the performance of a network, the method comprising: collecting different Key Performance Indicators (KPIs) from network radio access elements of a network comprising different sectors, said different KPIs being periodically collected every a configurable certain period of time during a specific time range at a sector level of said network; collecting via a proxy server deployed in an operator's network of said network different Quality of Experience (QoE) groundtruth metrics using weblogs and associating them to said different sectors of the network considering said same certain period of time; and relating the collected KPIs with a given QoE groundtruth metric of said collected QoE groundtruth metrics to compute a KPI score that better matches the given QoE groundtruth metric using a computing algorithm.

According to the proposed invention, the computing algorithm comprises executing the following steps: a) modifying a threshold value and/or a weight value used to categorize a status of a given sector of said different sectors; b) computing a correlation with the modified threshold and/or weight values providing a correlation result; and c) comparing said correlation result with a previous correlation result stored in a memory providing a comparison result and using said comparison result to compute the KPI score if the correlation result improves the previous correlation result or going back to step a) if the correlation result does not improve the previous correlation result.

According to an embodiment, the computing algorithm comprises a metaheuristic algorithm including a Particle Swarm Optimization (PSO) algorithm. The PSO algorithm in said step a) comprises modifying both the threshold value and the weight value and using in said step b) also both values to compute the correlation. More specifically, the PSO algorithm defines the weight value to be $-1 \leq w_i \leq 1$ and uses as threshold value, for each KPI, the minimum and maximum over all sectors such that $min(k_i) \leq t_i \leq max(k_i)$.

According to another embodiment, the computing algorithm in said step a) only modifies the weight value and further normalizes the collected KPIs to be in a range between 0 and 1.

The collected KPIs are preferably grouped in different groups such as a coverage group, an accessibility group, a retainability group, a mobility group and availability and congestion group.

According to an embodiment, the QoE metrics include throughput, latency and video streaming performance. In other embodiments, the method can be applied to any user QoE that correlates with KPIs.

Preferably, the weblogs includes a timestamp, download duration, a subscriber's id, bytes transferred and a web address.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

## Brief Description of the Drawings

The previous and other advantages and features will be more deeply understood from the following detailed description of embodiments, with reference to the attached figures, which must be considered in an illustrative and non-limiting manner, in which:

> Fig. 1 is a schematic illustration of the block diagram of the proposed method to quantify the performance of a network.

> Fig. 2 illustrates an embodiment of an algorithm used by the present invention to perform said quantification.

Detailed Description of the Invention and of Several Embodiments

Present invention provides a method, and also a corresponding system for its implementation, to bridge sector KPIs to reflect QoE groundtruth measurements such as throughput, latency and video streaming stall events. That is, a data-driven methodology is proposed to automatically establish the relation between KPIs and the groundtruth in order to provide insights about underperforming sectors.

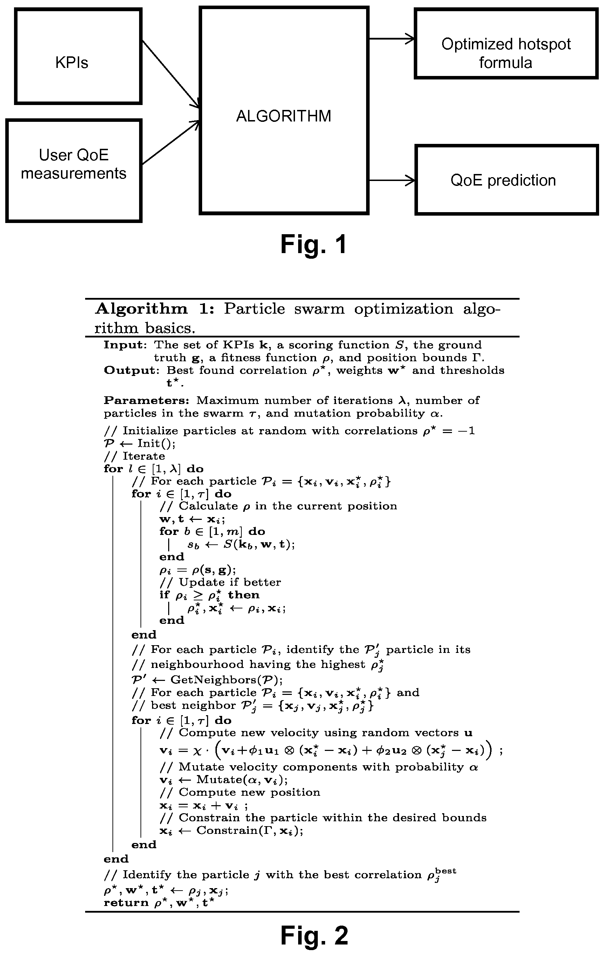

According to Fig. 1, radio KPIs are collected at the sector level whereas weblogs are created at a proxy server (e.g. a web proxy), not shown. The method combines the two to extract the relation and optimize the hotspot formula and a prediction of the user QoE.

Radio KPIs (input).-

According to an embodiment, the employed KPIs correspond to 3G sectors, and have been selected based on both internal knowledge and vendors' recommendations. Present invention can group such KPIs into the following classes: coverage (e.g., radio interference, noise level, power characteristics), accessibility (e.g., success establishing a voice or data channel, paging success, allocation of high-speed data channels), retainability (e.g., fraction of abnormally dropped channels), mobility (e.g., handovers' success ratio), availability and congestion (e.g., number of transmission time intervals, number of queued users waiting for a resource, congestion ratios, free channels available). It is important to underline that the data set captures the network at scale, that is, all 3G sectors and all customers observed.

In a particular exemplary embodiment, 21 KPIs for over 40000 sectors were collected.

KPIs are periodically collected every a configurable period of time (for instance every hour, not limitative as other time periods can be set) for a specific configurable time range (e.g. several months).

Combining Datasets.-

Following it is described how the two data sources i) a set of KPIs collected per sector, ii) QoE groundtruth metrics collected using weblogs at per HTTP request granularity and then associated to specific sectors and for the same hour window are combined.

KPIs can be though as features which are aimed to be associated with the QoE groundtruth for the same sector during the same time period.

The proxy server logs do not contain any information related to the sector where the data were consumed. Therefore, present invention uses radio events recorded by the Mobility Management Entity (MME) in order to enhance each web transaction with the set of sectors that were used. Indeed, MME servers logs the "control plane" messages (related to paging, radio channel requests, and handovers) each containing the sector from which users devices sent the message.

For each subscriber present invention can then create a timeline describing the sectors connected. With such information weblogs entries can be tagged based on the sector where the requests have been generated.

To avoid any ambiguities, if more than one sector were used to serve an object (i.e., there was a handover), present invention preferably discards the transaction (this occurs for less than 5% of the downloads).

It should be noted that this process is not trivial: radio events and weblogs corresponds to more than 3TB per day. In present invention case, the BigData cluster of a network operator was exploited to implement this enrichment. However the described job requires processing that can take hours, even in large data clusters.

The final step is to aggregate per requests metrics at a per sector and per-hour granularity (to match the KPI granularity). Therefore, the method extracts distribution related to the (min/max/avg and percentiles). Present invention provides correlations with respect to the median performance but other metrics can be considered too. At the end of this process the method has hourly per sector information related to the groundtruth.

To make any statistically significant correlations present invention, according to an embodiment, also removes all samples where less than 20 web downloads were made by users in a given sector-hour.

Hotspot formula optimization algorithm.-

As mentioned, the most straightforward mechanism to better relate a given groundtruth $g$ and the scores $s$ is by optimizing the thresholds $t$ and weights $w$ involved in the calculation. To relate the groundtruth $g$ and score s, the proposed method preferably uses a standard correlation. However, present invention is not interested in the raw quantities in groundtruth $g$ and score s, but rather in the sector rankings they define. In fact, the two quantities could lie in different ranges or have a monotonic non-linear relation and still produce the same sector ranking. Therefore, a natural choice to measure the correlation between the groundtruth $g$ and the score s is the Spearman's rank correlation coefficient, often called Spearman's $\rho$. The Spearman's $\rho$ is only affected by changes in the rankings of the input variables, and is thus invariant to scale, location, and monotonous non-

linear relations. Its output ranges from -1 (perfect reverse ranking) to 1 (exact same ranking).

Having defined the function relating $g$ and $s$, now it can be formulated the problem in terms of a classical optimization problem: the proposed method wants to find the weights $w$ and thresholds $t$ that maximize

$$\rho(s, g), \quad (2)$$

where $s = [s_1,...s_m]$ and $g = [g_1,...g_m]$ are vectors collecting all $m$ sector scores and groundtruth measurements, respectively. Notice that, as the values in $w$ and $t$ are real numbers, a potentially infinite number of such combinations is had.

Given that the calculation of $\rho$ is not directly differentiable (due to the ranking operation), and that it is computationally cheap (essentially involving two vector sorting, one vector subtraction, and one vector multiplication), the method, according to an embodiment, solves the previous optimization problem with a metaheuristic algorithm, such as the Particle swarm optimization (PSO).

PSO is a population based metaheuristic for solving continuous and discrete optimization problems. PSO has recently gained increasing popularity among researchers and practitioners as a robust and efficient technique for solving difficult optimization problems. It makes few or no assumptions about the problem being optimized, can search very large spaces of candidate solutions, and can be applied to problems that are irregular, incomplete, noisy, dynamic, not necessarily differentiable, etc.

PSO operates by having a population of candidate solutions, which are metaphorically represented as particles. At each iteration, these particles explore the search-space according to their current positions and a velocity towards a goal. They iteratively calculate the fitness $\rho$ corresponding to their current position, and update the latter according to the available knowledge of the search space. The movement of a particle is affected by the best position it has found but, in addition, it is also affected by the best known positions discovered by other particles. Moreover, particle movements are not deterministic, but partly stochastic, thus facilitating the exploration of the search space.

Before delving into the details of the PSO algorithm, first, the method defines what corresponds to a particle's position, which will be denoted by the vector $x_i$. Specifically, in the present case, the position will correspond to the 2n weights and thresholds: $x_i = [w,t]$. With that, the search space can be constrained with some domain/intuitive knowledge, imposing upper and lower bounds for the particles' positions. For the weights, the method defines them to be $-1 \leq w_i \leq 1$ (a resulting weight of zero means that the triggered KPI does not influence the groundtruth whereas values above or below zero contribute positively or negatively towards the score). For the thresholds, for each KPI, the minimum and maximum over all sectors is used such that $min(k_i) \leq t_i \leq max(k_i)$. When a particle exits the search space, its position is reset to a random location inside the established bounds.

Algorithm 1 (see Fig. 2) details the PSO functioning. First of all, the method initializes $T$ particles $P_i$ with random positions x, random velocities $v$, and lowest possible personal fitness $\rho = -1$. Next, the method starts iterating, with a maximum number of iterations $\lambda$. When iterations are finished, the method returns the best found correlation $\rho^*$ and position $x^*$ which, as mentioned, comprises the best found weights $w^*$ and thresholds $t^*$. The first inner loop of Algorithm 1 checks every particle's fitness by computing the Spearman's $\rho$. A particle $i$ updates its best known location $x^*_i$ and found correlation $\rho^*_i$ if the latter has improved over the previous value the particle had. The second inner loop performs the actual search towards a better solution.

The first step in the second inner loop is looking for promising positions found by the particle's neighbors. To facilitate exploration, it is common practice to consider different interactions between the particles, grouping them in so-called neighborhood topologies. Preferably, in present invention implementation, particles are grouped following a ring topology. Therefore, the neighborhood of a particle only consists of two other particles. Particles that are neighbors in the ring collaborate together and influence each other. This implicitly creates small groups of particles that explore different parts of the search space, while the ring itself is ultimately pulled towards the best known solution.

The next step in the second inner loop updates the particles' velocity. The new velocity of a particle $P_i$ ($v_i$) is influenced by the current position $x_i$, the distance from the position with its best known fit $x^*_i$, and the distance from the best known fit of the closest particle $x^*_j$. To further enhance the exploration capabilities of particles, the velocity vectors defined by $x^*_i - x_i$ and $x^*_j - x_i$ are component-wise multiplied ($\otimes$) with random vectors $u_1$ and $u_2$, formed by uniformly-distributed random values between 0 and 1.

Constants $X$, $\varphi_1$, and $\varphi_2$ are pre-set following the so called Clerc's constriction method, which is common practice in the PSO literature. These constants control the behavior of the particles, and allow an elegant and well-explained method for preventing explosion and ensuring convergence. In the proposed method, to prevent the stagnation of the swarm and to facilitate escaping from local maxima, a further random mutation of the velocity components is employed. For that, a small probability $\alpha$ is used.

According to Algorithm 1, three parameters are defined: the number of iterations $\lambda$, the number of particles $\tau$, and the mutation probability $\alpha$. From a theoretical stand point, the larger the value of $\lambda$ and $\tau$, the higher the chances to find globally optimal solutions. However, an unreasonably high value of those parameters could harm the efficiency of the algorithm (in terms of computation time). According to a particular exemplary embodiment, it was found that, with a ring of $\tau$ = 100 particles, $\alpha$ = 0.001 and $\lambda$ = 500 iterations, the method converged towards a solution that did not significantly improve if additional trials were performed. The method empirically found these settings to correspond $t_{0\tau}<50$ and $\alpha>10^{-3}$. Therefore, $\alpha=10^{-3}$ was set.

Until now, it has only been discussed how to optimize the default weights and thresholds used in the scoring function of Eq. 1. However, such function could be limited by the application of the thresholds, which hide the raw "analog" KPIs value. Thus, the method can also potentially significantly improve the correlation between the groundtruth $g$ and the score s by using the richer information in the raw KPI values. To that end, two alternative score functions are also proposed.

According to one of said alternatives, linear combinations of raw KPIs are proposed. This simply consists in removing the thresholding from Eq. 1, such that

$$\hat{S}_b(\mathbf{k}_b, \mathbf{w}) = \sum_{i=1}^{n} w_i \cdot k_{b,i}. \qquad (3)$$

To avoid having heavily asymmetric weights, the method however normalizes the KPIs to be in the range between 0 and 1.

According to the other of said alternatives, non-linear models are proposed. In this case, the method relies on machine learning algorithms to explore non-linear relationships between KPIs and the groundtruth. More specifically, in this case, the method doesn't use a scoring function, but directly associates KPIs and groundtruth $g$. A generic way to learn such association is through a machine learning regression algorithm.

A machine learning-based approach indeed offers a number of advantages. Firstly, the resulting model does not make any assumptions about the underlying function. Secondly, the model can (potentially) produce an actual value of the estimated performance rather than just a ranking. For instance, a regression tree builds a model that exploits the KPIs to estimate the actual conditions for each sector at that time: $f(k) \rightarrow g^{\wedge}$. Depending on the availability of groundtruth for the training set, the predicted value $g^{\wedge}$ can be any condition that correlates with the KPIs.

At the same time, a machine learning-based approach presents some disadvantages. Firstly, most machine learning models optimize against the target variable (e.g., mean squared error), whereas in the optimization process the method defines the target: optimize the ranking.

Thus, this does not exactly match current practice, as network operators would prefer a prioritized ranking of sectors to address. Secondly, the resulting machine learning model is often not easily human-interpretable, and network engineers cannot modify it to include external restriction such as SLAs or other priorities. Furthermore, certain KPIs might have significant importance in terms of detecting a failure rather than performance degradation. Thirdly, it breaks the current paradigm and the tools that are already used in operation.

In present invention, the scikit-learn toolkit was used, a well-known machine learning framework offering various techniques (e.g., decision trees, random forests, SVMs, neural network regression, etc.). In preliminary analysis, the best results were achieved with random forests. The mean square error was used for the tree split criterion and 100 tree estimators. To avoid any over-fitting, the minimum number of samples that end up in leaf-nodes to 0.5% of the dataset was restricted, as this will not allow the tree to grow indefinitely. These parameters were studied with separate training sets and they were later applied to a validation data set.

In any case, both the PSO algorithm and the machine learning algorithms provide significant improvement over baseline approaches. It is also recommended to apply a simple linear combination of raw KPI values and to avoid the currently used thresholding mechanisms. With that the proposed method gained more than 3x the correlation.

Machine-learning regression techniques offer a slightly lower correlation with respect to PSO algorithm. However, they enable an estimation of the actual values of performance metrics (instead of a score) which is, as a first order approximation and without very fine-grained tuning, sufficiently accurate to separate correctly performing from underperforming sectors.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

**Claims**

1. A computer implemented method to quantify the performance of a network, the method comprising:

collecting different Key Performance Indicators, or KPIs, from network radio access elements of a network comprising different sectors, said different KPIs being periodically collected every certain period of time during a specific time range at a sector level of said network;
collecting via a proxy server deployed in an operator's network of said network different Quality of Experience, or QoE, groundtruth metrics using weblogs and associating them to said different sectors of the network considering said same certain period of time; and
relating the collected KPIs with a given QoE groundtruth metric of said collected QoE groundtruth metrics to compute a KPI score that better matches the given QoE groundtruth metric using a computing algorithm executing the following steps:

a) modifying a threshold value and/or a weight value used to categorize a status of a given sector of said different sectors;
b) computing a correlation with the modified threshold and/or weight values providing a correlation result; and
c) comparing said correlation result with a previous correlation result stored in a memory providing a comparison result and using said comparison result to compute the KPI score if the correlation result improves the previous correlation result or going back to step a) if the correlation result does not improve the previous correlation result.

2. The method of claim 1, wherein said computing algorithm comprises a metaheuristic algorithm including a Particle Swarm Optimization, or PSO, algorithm, said PSO algorithm in said step a) modifying both the threshold value and the weight value and using in said step b) also both values to compute the correlation.

3. The method of claim 2, comprising defining the weight value to be $-1 \leq w_i \leq 1$ and using as threshold value, for each KPI, the minimum and maximum over all sectors such that $min(k_i) \leq t_i \leq max(k_i)$.

4. The method of claim 1, wherein said computing algorithm in said step a) only modifies the weight value and further normalizes the collected KPIs to be in a range between 0 and 1.

5. The method of any of previous claims, wherein said collected KPIs being grouped in different groups including a coverage group, an accessibility group, a retainability group, a mobility group and an availability and congestion group.

6. The method of previous claims, wherein the QoE metrics at least include throughput, latency and video streaming performance.

7. The method of claim 6, wherein the weblogs includes a timestamp, download duration, a subscriber's id, bytes transferred and a web address.

8. The method of claim 1, wherein said certain period of time in which the KPIs are periodically collected is configurable.

9. A system to quantify the performance of a network, comprising:

a memory; and
at least one processor,
wherein said at least one processor being adapted and configured to relate different Key Performance Indicators, or KPIs, with a given Quality of Experience, or QoE, groundtruth metric of different QoE groundtruth metrics to compute a KPI score that better matches the given QoE groundtruth metric using a computing algorithm executing the following steps:

a) modifying a threshold value and/or a weight value used to categorize a status of a given sector of different sectors of a network;
b) computing a correlation with the modified threshold and/or weight values providing a correlation result; and
c) comparing said correlation result with a previous correlation result stored in a memory providing a comparison result and using said comparison result to compute the KPI score if the correlation result improves the previous correlation result or going back to step a) if the correlation result does not improve the previous correlation result,

wherein said different KPIs being periodically collected every certain period of time during a specific time range from network radio access elements of said network, said KPIs being collected per sector of a network, and wherein said different QoE groundtruth metrics being collected via a proxy server deployed in an operator's network of said network using weblogs and associating them to said different sectors of the network considering said same certain period of time.

10. A computer program product tangibly embodied in a non-transitory machine-readable storage medium including code instructions that, when executed by at least one processor of a computer system implements the method of any of previous claims 1 to 9.

**Fig. 1**

---

**Algorithm 1:** Particle swarm optimization algorithm basics.

**Input:** The set of KPIs $\mathbf{k}$, a scoring function $S$, the ground truth $\mathbf{g}$, a fitness function $\rho$, and position bounds $\Gamma$.

**Output:** Best found correlation $\rho^\star$, weights $\mathbf{w}^\star$ and thresholds $\mathbf{t}^\star$.

**Parameters:** Maximum number of iterations $\lambda$, number of particles in the swarm $\tau$, and mutation probability $\alpha$.

// Initialize particles at random with correlations $\rho^\star = -1$
$\mathcal{P} \leftarrow \text{Init}()$;
// Iterate
**for** $l \in [1, \lambda]$ **do**
    // For each particle $\mathcal{P}_i = \{\mathbf{x}_i, \mathbf{v}_i, \mathbf{x}_i^\star, \rho_i^\star\}$
    **for** $i \in [1, \tau]$ **do**
        // Calculate $\rho$ in the current position
        $\mathbf{w}, \mathbf{t} \leftarrow \mathbf{x}_i$;
        **for** $b \in [1, m]$ **do**
            $s_b \leftarrow S(\mathbf{k}_b, \mathbf{w}, \mathbf{t})$;
        **end**
        $\rho_i = \rho(\mathbf{s}, \mathbf{g})$;
        // Update if better
        **if** $\rho_i \geq \rho_i^\star$ **then**
            $\rho_i^\star, \mathbf{x}_i^\star \leftarrow \rho_i, \mathbf{x}_i$;
        **end**
    **end**
    // For each particle $\mathcal{P}_i$, identify the $\mathcal{P}_j'$ particle in its
    // neighbourhood having the highest $\rho_j^\star$
    $\mathcal{P}' \leftarrow \text{GetNeighbors}(\mathcal{P})$;
    // For each particle $\mathcal{P}_i = \{\mathbf{x}_i, \mathbf{v}_i, \mathbf{x}_i^\star, \rho_i^\star\}$ and
    // best neighbor $\mathcal{P}_j' = \{\mathbf{x}_j, \mathbf{v}_j, \mathbf{x}_j^\star, \rho_j^\star\}$
    **for** $i \in [1, \tau]$ **do**
        // Compute new velocity using random vectors $\mathbf{u}$
        $\mathbf{v}_i = \chi \cdot \left( \mathbf{v}_i + \phi_1 \mathbf{u}_1 \otimes (\mathbf{x}_i^\star - \mathbf{x}_i) + \phi_2 \mathbf{u}_2 \otimes (\mathbf{x}_j^\star - \mathbf{x}_i) \right)$ ;
        // Mutate velocity components with probability $\alpha$
        $\mathbf{v}_i \leftarrow \text{Mutate}(\alpha, \mathbf{v}_i)$;
        // Compute new position
        $\mathbf{x}_i = \mathbf{x}_i + \mathbf{v}_i$ ;
        // Constrain the particle within the desired bounds
        $\mathbf{x}_i \leftarrow \text{Constrain}(\Gamma, \mathbf{x}_i)$;
    **end**
**end**
// Identify the particle $j$ with the best correlation $\rho_j^{\text{best}}$
$\rho^\star, \mathbf{w}^\star, \mathbf{t}^\star \leftarrow \rho_j, \mathbf{x}_j$;
**return** $\rho^\star, \mathbf{w}^\star, \mathbf{t}^\star$

---

**Fig. 2**

Europäisches
Patentamt

European
Patent Office

Office européen
des brevets

# EUROPEAN SEARCH REPORT

Application Number

EP 17 38 2164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/119020 A1 (HENDERSON THOMAS W [US] ET AL) 30 April 2015 (2015-04-30)<br>* paragraph [0020] - paragraph [0023] *<br>* paragraph [0039] - paragraph [0053] *<br>* paragraph [0067] - paragraph [0072] *<br>* paragraph [0093] - paragraph [0094] *<br>----- | 1-10 | INV.<br>H04W24/02 |
| X | US 2013/290525 A1 (FEDOR SZYMON [IE] ET AL) 31 October 2013 (2013-10-31) | 1,9,10 | |
| Y | * claims *<br>----- | 2 | |
| Y | US 8 018 874 B1 (OWECHKO YURI [US])<br>13 September 2011 (2011-09-13)<br>* abstract *<br>----- | 2 | |
| A | US 2014/037989 A1 (KUNLIANG ZHANG [US] ET AL) 6 February 2014 (2014-02-06)<br>* paragraph [0047] - paragraph [0078] *<br>----- | 1-10 | |
| A | "3rd Generation Partnership Project; Technical Specification Group Services and System Aspects; Telecommunication management; Study on Key Quality Indicators (KQIs) for service experience (Release 14)",<br>3GPP STANDARD; 3GPP TR 32.862, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>vol. SA WG5, no. V14.0.0,<br>21 March 2016 (2016-03-21), pages 1-41, XP051088308,<br>[retrieved on 2016-03-21]<br>* paragraph [0004] *<br>----- | 1-10 | TECHNICAL FIELDS SEARCHED (IPC)<br><br>H04W<br>H04L |

The present search report has been drawn up for all claims

| Place of search | Date of completion of the search | Examiner |
|---|---|---|
| Munich | 13 October 2017 | Roberti, Vincenzo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 38 2164

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2017

| Patent document cited in search report | | Publication date | Patent family member(s) | | Publication date |
|---|---|---|---|---|---|
| US 2015119020 | A1 | 30-04-2015 | NONE | | |
| US 2013290525 | A1 | 31-10-2013 | BR 112013010107 | A2 | 06-09-2016 |
| | | | EP 2633644 | A1 | 04-09-2013 |
| | | | KR 20130062363 | A | 12-06-2013 |
| | | | US 2013290525 | A1 | 31-10-2013 |
| | | | WO 2012055449 | A1 | 03-05-2012 |
| US 8018874 | B1 | 13-09-2011 | NONE | | |
| US 2014037989 | A1 | 06-02-2014 | JP 5820102 | B2 | 24-11-2015 |
| | | | JP 2011008907 | A | 13-01-2011 |
| | | | US 2010330395 | A1 | 30-12-2010 |
| | | | US 2014037836 | A1 | 06-02-2014 |
| | | | US 2014037989 | A1 | 06-02-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. KREHER ; K. GAENGER.** Key Performance Indicators and Measurements for LTE Radio Network Optimization. John Wiley & Sons, Ltd, 2010
- Mobile network planning and kpi improvement. **M. A. ALAM.** Thesis. Department of Physics and Electrical Engineering, 2013
- **H. HOLMA ; A. TOSKALA.** WCDMAfor UMTS: HSPA Evolution and LTE. John Wiley & Sons, Inc, 2007
- **S.-V. HN.** Case studies of network planning for wireless broadband services hsdpa and wimax. *Master Thesis, OmniTele,* 2007
- **J. D. L. DELGADO ; J. M. R. SANTIAGO.** *Key performance indicators for QOS assessment in TETRA networks,* 2014
- **G. H. X KAIPING.** Gsm kpi monitoring and improvement guide. Huawei Technologies Co., Ltd, 2008
- **N. AGARWAL.** Wcdma: Kpi analysis & optimization. Nokia Technologies Co., Ltd, 2008